**Europäisches Patentamt**

**European Patent Office**

**Office européen des brevets**

(19)

(11) Veröffentlichungsnummer: **0 047 992**
**B1**

# (12) EUROPÄISCHE PATENTSCHRIFT

(45) Veröffentlichungstag der Patentschrift:
26.02.86

(51) Int. Cl.⁴: **C 08 G 8/20, C 09 K 3/14**

(21) Anmeldenummer: 81107175.2

(22) Anmeldetag: 11.09.81

(54) Verfahren zur Herstellung von Kunstharzen auf der Basis von Resorcin-Verbindungen.

(30) Priorität: 17.09.80 DE 3034948

(43) Veröffentlichungstag der Anmeldung:
24.03.82 Patentblatt 82/12

(45) Bekanntmachung des Hinweises auf die Patenterteilung:
26.02.86 Patentblatt 86/9

(84) Benannte Vertragsstaaten:
AT BE CH DE FR GB IT LI NL SE

(56) Entgegenhaltungen:
DE - B - 1 801 327
DE - C - 1 116 392
GB - A - 665 197

Patent Abstracts of Japan Band 4, Nr. 19, 16. Februar 1980 Seite 15C73

(73) Patentinhaber: HOECHST AKTIENGESELLSCHAFT,
Postfach 80 03 20, D-6230 Frankfurt am Main 80 (DE)

(72) Erfinder: Hesse, Wolfgang, Dr., Pfingstbornstrasse 83,
D-6200 Wiesbaden (DE)
Erfinder: Landauer, Franz, Dr., Liederbacher Strasse 7,
D-6230 Frankfurt am Main 80 (DE)
Erfinder: Schmiedel, Klaus, Dr., Am Eichkopf 11,
D-6240 Königstein/Taunus (DE)

## Beschreibung

Bei der Herstellung von Resorcin aus Benzolidsulfonsäure fällt als Destillationsrückstand ein schwarzes Pech an, dessen Struktur nicht genau bekannt ist. Es enthält geringe Reste an Resorcin, der Hauptbestandteil sind Selbstkondensationsprodukte des Resorcins oder Umwandlungsprodukte von Verdindungen, die bei der Resorcinsynthese entstehen und wegen ihren geringen Flüchtigkeit in dem Destillationsrückstand verbleiben. Die molekulare Verteilung reicht bis zu Molekularmassen zwischen 500 und 2000, die OH-Zahl liegt zwischen 600 und 850. Das spricht im wesentlichen für Selbstkondensat des Resorcins. Diese zäh-klebrige Masse ist schwer zu handhaben und war bisher ein wertloses Abfallprodukt, das teilweise wasserlöslich ist und wegen der Gefahr von Umweltbelastungen mit erheblichem Aufwand als Sondermüll deponiert oder verbrannt werden mußte, um die Verunreinigung des Grundwassers zu verhindern. Das Verbrennen des Resorcinpechs stellt durch die Zusammensetzung der Rauchgase und besonders durch deren Rußgehalt auch eine Umweltbelastung dar und ist zudem mit erheblichem technischen und Energieaufwand verbunden. Es war daher erwünscht, das Resorcinpech einer wirtschaftlich interessanten Wiederverwertung zuzuführen bzw. es in eine solche Form zu bringen, die keine Umweltschädigung mit sich bringt.

Es ist ferner bekannt, daß unter den Bedingungen der Destillation von Resorcin Xanthinderivat entstehen.

Es ist auch bakannt, wärmehärtbare Harze herzustellen, indem man (a) Aldehyde und (b) einen Teer auf Basis eines metasubstituierten Phenols der als Nebenprodukt bei der Herstellung von Resorcin durch Umsetzung von Wasserstoffperoxid mit meta-Diisopropylbenzol anfällt, und mehr als einem Mol Phenol, Harnstoff oder Melamin kondensiert.

Durch die Umsetzung von Aldehyden und diesem Terr bei 60 bis 150°C in Gegenwert eines sauren oder ortho-dirigirenden Katalysators erhält man Novolake; dabei beträgt die Menge des Aldehydes 0,4 bis 0,9 Äquivalente pro Äquivalent an aromatischen Ringen des Teers; an 100 Teile dieses Harzes werden 10 bis 15 Teile Hexamethylentetramin addiert und das so erhaltene Produkt soll zu einem Material mit guter Alkalibeständigkeit und gutem Elektroisoliervermögen härtem. Andererseits kann man Resolharze durch Umstezung des Rohmaterials mit 1 bis 2,5 Äquivalenten Aldehyde pro Äquivalent an aromatischen Ringen im Teer bei 50 bis 100°C in Gegenwart von alkalischen Katalysatoren erhalten (Jap-OS Sho 54-154 494).

Dieser Teer hat offensichtlich eine ganz andere Zusammensetzung und andere Eigenschaften als der, der bei der Herstellung von Resorcin aus Benzoldisulfonsäure erhalten wird. So ergibt es sich aus dem Vorhergehenden, das die phenolische Komponte, die in dem Teer enthalten ist, nur eine geringe Aktivität besitzt, die etwa der eines normalen Phenols entspricht; denn man soll durch Umsetzung dieses Teers mit 2 bis 2,5 Äquivalenten Aldehyd in Gegenwart eines alkalischen Katalysators bei 50 bis 100°C Resole herstellen können, während es bekannt ist, daß aus Resorcin selbst überhaupt keine lagerfähigen Resole erhalten werden können. Auch aus dem Teer, der bei der Herstellung von Resorcin aus Benzoldisulfonsäure anfällt, können solche Resole nicht hergestellt werden. Diese Teer und Resorcin selbst ergeben selbst bei Raumtemperatur schon vernetzte Produkte, d.h. Resite. Es ist also offensichtlich, daß der Teer, der bei der Synthese von Resorcin durch Umsetzung von meta-Diisopropylbenzol mit Wasserstoffperoxid erhalten wird, nicht mit dem Teer vergleichbar ist, der bei der Herstellung von Resorcin aus Benzoldisulfonsäure erhalten wird.

Die Erfindung ermöglicht nun die sinnvolle Verwertung von Resorcinpech, das bei der Herstellung von Resorcin aus Benzoldisulfonsäure anfällt, indem dieses in hochwertige Kunstharze umgewandelt wird.

Gegenstand der Erfindung ist ein Verfahren zur Herstellung von Kunstharzen auf der Basis von Resorcin-Verbindungen mit Oxoverbindungen, welches dadurch gekennzeichnet, ist, daß Resorcinpech, das bei der Herstellung von Resorcin aus Benzoldisulfonsäure anfällt, mit Oxoverbindungen in Form von Aldehyden oder Ketonen oder mit Verbindungen, die aus diesen Substanzen aufgebaut sind oder diese abspalten, in mindestens einer Stufe umgesetzt wird.

Überraschenderweise erhält man Kunstharze die sich leicht handhaben lassen. Es können beispielsweise in organischen Lösungsmitteln lösliche, schmelzbare Kunstharze erhalten werden, die je nach Wunsch in einer weiteren Stufe mit einer oder mehreren geeigneten Substanzen, wie in erster Linie mit den erwähnten Oxo-Verbindungen, deren Derivaten oder Verbindungen, die Oxo-Verbindungen abspalten unter Härtung vernetzt werden. Hierbei kann man gegebenfalls von denselben Verbindungen, wie sie zur Reaktion in der ersten Stufe eingesetzt werden, Gebrauch machen.

Es ist möglich, die Reaktion derart zu führen, daß vollständig vernetzte Produkte erhalten werden, die nur teilweise löslich sind.

Nach einer anderen Ausführungsform der Erfindung lassen sich auch lösliche, nicht vernetzende Kunstharze vom Novolaktyp herstellen, deren Schmelzpunkt deutlich über Raumtemperatur liegt.

Geeignete Oxo-Verbindungen in Form von Aldehyden sind z.B. Acetaldehyd, Furfurol, vorzugsweise jedoch Formaldehyd. Ein geeignets Keton ist Aceton. Als Verbindungen, die aus derartigen Oxo-Verbindungen aufgebaut sind, eignen sich z. B Phenolharz, und zwar Resole oder Kombinationen von Novolaken und Aldehyden auf der Basis von einwertigen ein- und/oder mehrkernigen substituierten und/oder unsubstituierten Phenolen, wie Diphenylolpropan, -methan, insbesondere Alkylphenolen, wie Butyl-phenol, Octylphenol, Nonylphenol, Dodecyl-phenol. Ferner eignen sich Aminharze, wie Melaminharz, Guanaminharz, Dicyandiamidharz oder Harnstoffharz, die ebenso wie die Resole mit Alkoholen, z. B. einwertigen Alkoholen mit 1 bis 4 C-Atomen, veräthert seine können. Wenn auch durch diese Verätherung die Reaktionsgeschwindigkeit des Aminoplastes mit Resorcinpech herabgesetzt wird, bewirkt die Verätherung oft bessere Verträglichkeit der Reaktionspartner miteinander oder bessere Verträglichkeiten mit dritten Substanzen.

Substanzen, die aus Oxo-Verbindungen auf-gebaut sind, sind beispielsweise Paraformalde-hyd und Trioxan und eine Verbindung, die eine Oxo-Verbindung abspaltet, ist Hexamethylentetramin.

Im allgemeinen erfolgt die Umsetzung bei einer Temperatur zwischen Raumtemperatur und 300°C, vorzugsweise zwischen 40°C und 200°C, insbesondere zwischen 50 und 150°C, wobei die angewandte Temperatur auch von dem gewünschten Harztyp abhängt. So arbeitet man zur Herstellung des nur teilweise vernetzten Reaktionsproduktes in der Regel zwischen 40 und 200°C. Das erhaltene Produkt kann dann gegebenenfalls, z. B. in Gegenwart von Hexamethylentetramin, bei erhöhter Temperatur von 100 bis 200, vorzugsweise 110 bis 140°C gehärtet werden, Es kann aber auch für manche Zwecke in ungehärtetem Zustand eingesetzt werden. Will man hingegen ein vorweigend vernetztes Produkt herstellen, führt man die Reaktion zweckmäßig bei 40 bis 100°C, vorzugsweise 50 bis 90°C durch. Bei einer zweistufigen Umsetzung arbeitet man in erster Stufe z. B. mit einem Resol im allgemeinen bei 80 bis 200°C, vorzugsweise 100 bis 160, insbesondere bei 120 bis 140°C unter Bildung eines löslichen Produkts, worauf in zweiter Stufe eine weitere Umsetzung mit einem Resol erfolgt.

In der Regel läßt sich die Reaktion wegen der hohen Reaktionsgeschwindigkeit und wegen des großen Reaktionsvermögens des Resorcinpechs ohne Katalysator durchführen. In manchen Fällen kann es jedoch erwünscht sein, in Gegenwart eines Katalysators zu arbeiten. Als Katalysatoren kommen z. B. Mineralsäuren wie Schwefelsäure, Salzsäure, Phosphorsäure, nie demolekulare Carbonsäure, wie Ameisensäure, Essigsäure, Oxalsäure, Milchsäure und Weinsäure, ferner Basen wie Alkali-und/oder Erdalkalihydroxyde, z. B. von Calcium, Barium und Magnesium, ferner Salze dieser Metalle und von Übergangsmetallen mit der vorstehend genannten oder anderen Säuren in Frage, z. B. Acetate, Octoate oder Naphthenate von Zink, Cadium, Kupfer oder dergleichen.

Das erfindungsgemäß verwendete Resorcin-pech besitzt gegenüber Oxo-Verbindungen oder aus Oxo-Verbindungen aufgebauten Substanzen im wesentlichen eine ebenso hohe Reaktivität wie Resorcin. Es besitzt im Vergleich zu einwertigen Phenolen und Harzen daraus aber den Vorteil der erhöhten Reaktivität gegenüber Oxo-Verbindungen, besonders gegenüber Formaldehyd. Bei der Reaktion von Resolen mit dem erfindungs—gemäß verwendeten Resorcinpech kann man nach Wunsch, wenn man mit einem Resolüberschuß arbeitet, die hohe Reaktivität des Resorcinpechs gegenüber Formaldehyd dadurch aufheben, daß man die reaktiven Kernwasserstoff-Atome des Resorcinpechs weitgehend oder vollständig durch Phenolharz substituiert und dadurch-eventuell vollständig vernetzte-Produkte mit erhöhtem Molekulargewicht erhält.

Nach einer Ausführungsform der Erfindung werden 5 bis 100, vorzugsweise 10 bis 60 g. Resorcinpech pro Mol Gesamtphenol eines Resols umgesetzt. Falls man jedoch von Formaldehyd ausgeht, weden im allgemeinen 200 bis 800 g, vorzugsweise 300 bis 600 g Resorcinpech mit einem Mol Formaldehyd umgesetzt. Das optimale Mengenverhältnis kann empirisch ermittelt werden. Falls man kein vernetztes Produkt erhalten will, wird man die Phenolharzmenge niedriger halten und die Reaktionszeit kürzer wählen. In diesem Fall bleibt die hohe Reaktivität des Resorcinpechs gegenüber Formaldehyd erhalten, so daß das Produkt gegebenenfalls auch erst bei seiner Anwendung weiter umgesetzt werden kann.

Auf dieselbe Weise läßt sich das Resorcinpech auch mit den Aminharzen umsetzen, wobei das Resorcinpech im allgemeinen in einer Menge von 100 bis 1200 g, vorzugswise zwischen 200 bis 1000 g je Mol des mit Resorcinpech umzusetzenden Aldehyds, vorzugsweise Formaldehyds liegt.

Die Reaktion kann in Gegenwart von Lösungsmitteln, z. B. in Wasser, organischen Lösungsmitteln wie Toluol, Xylol, Äthanol, den Propanolen oder Butanolen oder dergleichen, oder auch in der Schmelze erfolgen. Obwohl gewöhnlich kein Überdruck erforderlich ist, ist es auch möglich, unter erhöhtem Druck zu arbeiten.

Die erfindungsgemäß erhaltenen Harze zeichen sich durch wertvolle Eigenschaften aus. Sie weisen eine hohe Wärmeund Chemikalienbeständigkeit, gute Wasserbeständigkeit, auch gegenüber kochendem Wasser auf. Sie sind also gegenüber Wasser wesentlich unempfindlicher als Kunstharze auf Basis von Resorcin. Aufgrund der verringerten Flüchtigkeit im Vergleich zu Resorcin gestaltet sich die Verarbeitung des Resorcinpechs günstiger. So tritt die bei der Umsetzung von Resorcin in der Hitze gefürchtete Rauchbildung nicht auf. Auch wird bei der Umsetzung in erster Stufe mit Formaldehyd weniger Formaldehyd als Vernetzungsmittel benötigt, als dies bei Resorcin der Fall wäre. Ein besonderer Vorteil der erfindungsgemäß erhaltenen Produkte besteht darin, daß sie keinen freien Formaldehyd enthalten. Dies ist auch dann der Fall, wenn das Resorcinpech bzw. das in erster Stufe erhaltene Produkt mit einem Harz, das noch freien Formaldehyd enthält, umgesetzt wurde. Damit erhält main ein schadstofffreies Produkt.

Durch die Modifizierung mit Phenol- und/oder Aminharzen können gegebenenfalls die Verträglichkeit mit anderen Stoffen und die Löslichkeit der Produkte in gewüschtem Maße variiert werden. Solche Harze können je nach Verfahrensweise und Ausgangsstoffen bzw. Reaktionspartnern wasserlöslich sein, sich im Ammoniak oder Alkalien lösen, aber auch, besonders wenn alkylsubstituierte Resole als Reaktionspartner gewählt werden, hydrophoben Charakter besitzen.

Aufgrund ihrer guten Eigenschaften sind die erfindungsgemäß erhaltenen Produkte vielseitig verwendbar. Sie eignen sich z. B. als Bindemittel zur Herstellung von härtbaren Formmassen, Klebstoffen, z. B. für die Holzleimung, -gegebenenfalls wasserlöslichen—Lacken, Imprägniermitteln und Bindemitteln für Fasern und sonstige Materialien, zur Herstellung von Vliesen mit natürlichen oder synthetischen Fasern, Mineral- oder Glaswolle, zur Fertigung von Schleifscheiben oder Schleifmitteln. In der Gummi-Technologie lassen sich die neuen Harze als Verstärkerharze mit erhöhter Reaktivität gegenüber Hexamethylentetramin, als Klebrigmacher oder Haftverbesserer einsetzen.

Die Eignung der erfindungsgemäß erhaltenen Produkte für Klebstoffe ist besonders überraschend. Man kann nämlich Klebstoffdispersionen auf Basis von Polyvinylacetat nicht mit Resorcinharzen oder Resorcin verstärken. Der Zusatz der wäßrig-alkalischen oder wäßrigen Lösungen dieser Substanzen Führt sofort zur Koagulation. Das ist bei Kondensaten des Resorcinpechs nicht der Fall. Der Anteil der Polyvinylacetatdispersion in der Kombination beträgt z. B. 50 bis 95 und derjenige des erfindungsgemäßen Resorcinharzes 50 bis 5 Gew.-Teile (jeweils als Feststoffgehalt).

Holzverleimungen, die mit so modifizierten Polyvinylacetat-Dispersionen hergestellt werden, sind kochwasserfest nach DIN 68 602/68 603.

Andererseits ist es auch möglich, Klebharz für einen Kontaktkleber herzustellen, der z. B. als Klebharz ein Alkylphenolharz (Resol) wie Butylphenol-Formaldehyd-Harz enthält, mit dem bis zu 3 Gew.-% Resorcinpech umgesetzt wurden.

In manchen Fällen kann das erfindungsgemäße Verfahren auch dazu benutzt werden, um das Resorcinpech in eine bei der Deponie problemlose, wasserunlösliche Form überzuführen.

In den folgenden Beispielen bedeuten T=Gew.-Teile und %=Gew.%Prozent. Die B-Zeit wurde jeweils nach DIN 16 916 bestimmt und die Viskosität (50 %ig) in Äthylenglykolmonoäthyläther bei 20°C.

Beispiele
1. In einem Reaktionsgefäß, welches mit Thermometer, Rührer, Rückflußkühler und absteigenden Kühler versehen ist, werden 400 T REsorcinpech mit einer Hydroxylzahl von 738 geschmolzen und auf 125°C erhitzt. Danach werden 81 T wäßrigen Formaldehyds (37%) zugetropft. Anschließend kocht man eine halbe Stunde am Rückfluß. Dabei sinkt die Temperatur auf 115°C. Dann destilliert man am absteigenden Kühler 67 T wäßrigen Destillates ab. Dieses enthält keinen Formaldehyd. Im Reaktionsgefäß verbleiben 410 T Kunstharz. Kennzahlen: Schmelzpunkt 90°C, Rückstand (1 h/135°C) 99,5%, Viskosität 4500 mPa.s.

Dieses Harz eignet sich gut zur Herstellung von Schleifkörpern.

Eine 50%ige Lösung dieses Harzes in n-Butanol wird mit 5% Hexamethylentetramin versetzt und gerührt, bis sich alles gelöst hat. Die B-Zeit beträgt bei 120°C 2 Minuten.

10 T des vernetzten Harzes werden im Mörser pulverisiert, mit 100 T Wasser bei Raumtemperatur übergossen und 24 Stunden stehen gelassen. Das überstehende Wasser bleibt hell, Ein geringen Bromverbrauch deutet auf einen geringen Gehalt an wasserlöslichen nicht definierten Phenolen hin. Diese gehärtete Substanz läßt sich ohne Schwierigkeit in der Deponie ablagern.

2a) Herstellung des harzes
In einem mit Thermometer und Rührer ausgestatteten Reaktionsgefäß werden 470 T Phenol und 240 T Natronlauge (33%ig) aufgeschmolzen und auf 50°C erwärmt. Wenn diese Temperatur erreicht ist, trägt man innerhalb einer Stunde 198 T Paraformaldehyd (91%) in 10 Portionen ein und rührt bei 60°C, bis der Formaldehydegehalt nach 4 Stunden 0,25 % beträgt. Dann trägt man eine Schmelze aus 440 T Resorcinpech und 60 T Wasser ein und rührt bei 80°C, bis die Viskosität von 550 mPa.s auf 1500 mPa.s angestiegen ist (3 Stunden). Die erhaltene wäßrige Kunstharzlösung ist in jedem Fall gut mit Wasser mischbar. Sie ist auch mit anderen Phenolharzen mischbar.

Diese Lösung kann dazu verwendet werden, um nach Vermischen mit einem anderen Resol auf der Basis von Phenol, Kresol und Formaldehyd, das noch etwa 3% freien Aldehyd enthält, den darin enthaltenen freien Formaldehyd abzufangen. Eine Mischung aus 1 T der Harzlösung nach Beispiel 2a und 4 T dieses Phenolresoles besitzt eine Topfzeit von 60 h. Bereits eine halbe Stunde nach dem Zumischen ist in der Harzmischung keine freier Formaldehyd mehr nachweisbar. Die Härtungsgeschwindigkeit der Mischung ist gegenüber dem Ausgangsreşol wesentlich beschleunigt. Während die B-Zeit diese Resols 13,5 mit/120°C beträgt, wird sie durch den Zusatz auf 6 min 45 s verkürzt.

2b) Verwendung des produktes
Das nach 2a) erhaltene Harz wird im Mengenverhältnis 20:80 mit einer Polyvinylacetat-Dispersion (50%ig) vermischt. Es bleibt eine glatte, gut verstreichbare Dispersion ohne erkennbare Ausscheidungen mit einer Topfzeit von 6 h. Diese Dispersion liefert heißwasserfeste Verklebungen von Hölzern nach DIN 68 602/603.

Im Vergleich dazu führt das Abmischen von Resorcin oder wäßrig-alkalischen Resorcinharzlösungen mit der oben genannten Dispersion sofort zur Koagulation.

3) In einer mit Thermometer, Rührer und Vorrichtung zur azeotropen Destillation sowie absteigendem Kühler versehenen Apparatur

7        **0 047 992**        8

werden 400 T Resorcinpech geschmolzen und 270 T einer 60%igen Lösung von technischem Dimethylol-para-nonylphenol in Xylol versetzt und am Umlauf, d.h. unter Rückführung des Lösungsmittels, auf 150 bis 160°C erwärmt. Dabei scheiden sich 25 T Wasser ab. Nach Beendigung der Wasserabscheidung wird das Lösungsmittel unter Atmosphären-Druck am abstiegenden Kühler abdestilliert, bis eine Temperatur von 220°C erreicht ist. Danach hält man den Ansatz eine Stunde unter vermindertem Druck, um den Rest flüchtiger Anteile zu entfernen. Es verbleiben 575 T eines vollkommen wasserunlöslichen Kunstharzes. Kennzahlen: Viskosität 1350 mPa.s, Schmelzpunkt 70°C, löslich in Butanol, anderen Lösungsmitteln vergleichbarer Polarität sowie in Methylenchlorid.

4) In einem Reaktionsgefäß, welches mit Thermometer, Rührer, absteigendem Kühler und Dosiergefäß versehen ist, werden am absteigenden Kühler 400 T Resorcinpech mit einer Hydroxylzahl von 702 geschmolzen und auf 180°C erhitzt. Dann setzt man 30 T Hexamethoxymethylmelamin (technisch) innerhalb einer halben Stunde zu und destilliert zugleich den freiwerdenden Methylalkohol ab. Ausbeute: 148 T Harz. Kennzahlen: Schmelzpunkt 94/96°C, Viskosität 3200 mPa.s,

Eine 50%ige Lösung dieses Harzes in n-Butanol wird mit 6% Hexamethylentetramin versetzt und gerührt, bis sich alles gelöst hat. Die B-Zeit beträgt 2 min/120°C.

5V Vergleichsversuch

5a) Herstellung des harzes

In einem Reaktionsgefäß wie im Beispiel 1 werden 440 T Resorcin, 50 T destilliertes Wasser und 2,5 T 10%ige Schwefelsäure gemeinsam geschmolzen und auf 125°C gebracht. Dann setzt mann innerhalb von 45 mit 211 T 37%ige wäßrige Formaldehydlösung zu. Die Reaktionstempatur sinkt dabei von 125 auf 118°C. 45 min nach Beendigung der Zugabe der wäßrigen Formaldehydlösung wird die Reaktion abgebrochen. Es fallen 492,5 T einer wäßrigen Resorcinharzlösung in quantitativer Ausbeute an; Rückstard (1 h/135°C) 70%, Viskosität 1700 mPa.s.

5b) Verwendung des produktes

Das Harz wird wie nach Beispiel 2b) weiterverarbeitet. Wird das Resorcin-Formaldehyd-Kondensat jedoch der Dispersion zugesetzt, erfolgt Koagulation. Es ist daher zu diesem Zweck unbrauchbar.

**Patentansprüche**

1. Verfahren zur Herstellung von Kunstharzen auf der Basis von Resorcin-Verbindungen mit Oxo-Verbindungen, dadurch gekennzeichnet, daß Resorcin-Pech, das bei der Herstellung von Resorcin aus Benzoldisulfonsäure anfällt, mit Oxoverbindungen in Form von Aldehyden oder Ketonen oder mit Verbindungen, die aus diesen Substanzen aufgebaut sind oder diese abspalten, in mindestens einer Stufe umgesetzt wird.

2. Verfahren nach Anspruch 1, dadurch gekennzeichnet, daß Resorcin-Pech mit Formaldehyd, einem -gegebenenfalls alkylierten-Phenolharz oder Aminharz oder mit Hexamethlentetramin umgesetzt wird.

3. Verfahren nach Anspruch 1 oder 2, dadurch gekennzeichnet, daß die Umsetzung zwischen Raumtemperatur und 300°C erfolt und vorzugsweise zwischen 40 und 200°C.

4. Verfahren nach einem oder mehreren der Ansprüche 1 bis 3, dadurch gekennzeichnet, daß 5 bis 100, vorzugsweise 10 bis 60 g Resorcin-Pech pro Mol Phenol eines Resols umgesetzt werden.

5. Verfahren nach einem oder mehreren der Ansprüche 1—3, dadurch gekennzeichnet, daß 200 bis 800 g, vorzugsweise 300 bis 600 g Resorcin-Pech mit einem Mol Formaldehyd umgesetzt werden.

6. Verfahren nach einem oder mehreren der Anspruch 1—5, dadurch gekennzeichnet, daß das Resorcin-Pech in erster Stufe zunächst mit einem Resol bei 80 bis 200, vorzugsweise 100 bis 160°C zu einem löslichen Produkt umgesetzt wird, worauf in zweiter Stufe eine weitere Umsetztung mit einem Resol erfolgt.

7. Verfahren nach einem oder mehreren der Ansprüche 1 bis 6, dadurch gekennzeichnet, daß die Reaktion in Gegenwart eines Katalysators der Gruppe Mineralsäuren oder niedermolekularen Carbonsäuren, Alkali- und/oder Erdalkalihydroxyd, Salze dieser Metalle oder von Übergangsmetallen mit vorstehenden organischen Säuren durchgeführt wird.

8. Verfahren nach einem oder mehreren der Ansprüche 1 bis 7, dadurch gekennzeichnet, daß man Resorcin-Pech so mit Phenolharz umsetzt, daß die reaktiven Kernwasserstoff-Atome des Resorcin-Pechs weitgehend oder vollständig durch Phenolharz substituiert sind.

9. Verwendung des nach einem oder mehreren der Ansprüche 1 bis 8 kergestellten Produktes als Bindemittel für Schleifkörper.

**Revendications**

1. Procédé de préparation de résines synthétiques à base de dérivés du résorcinol et de composés oxo, procédé caractérisé en ce qu'on fait réagir, en au moins une étape, la poix de résorcinol qui se forme lors de la préparation du résorcinol à partir de l'acide benzènedisulfonique avec des composés oxo sous la forme d'aldéhydes ou de cétones ou avec des composés qui ont été synthétisés à partir de tels composés oxo ou qui en libèrent.

2. Procédé selon la revendication 1 caractérisé en ce qu'on fait réagir la poix de résorcinol avec le formaldéhyde, avec une résine (éventuellement alkylée) dérivant du phénol ou d'une amine, ou avec l'hexaméthylènetétramine.

3. Procédé selon l'une des revendications 1 et 2, caractérisé en ce que la réaction est executée entre la température ambiante et 300°C, de préférence entre 40 et 200°C.

4. Procédé selon l'une quelconque des revendications 1 à 3, caractérisé en ce qu'on fait réagir de 5 à 100 g, de préférence de 10 à 60 g, de la poix de résorcinol par mole du phénol appartenant à un résol.

5. Procédé selon l'une quelconque des revendications 1 à 3, caractérisé en ce qu'on fait réagir de 200 à 800 g, de préférence de 300 à 600 g, de la poix de résorcinol par mole de formaldéhyde.

6. Procédé selon l'une quelconque des revendications 1 à 5, caractérisé en ce qu'on fait réagir la poix de résorcinol, dans une première étape, avec un résol, à une température de 80 à 200°C, de préférence de 100 à 160°C, de manière à obtenir un produit soluble, puis on effectue, dans une seconde étape, une réaction complémentaire avec un résol.

7. Procédé selon l'une quelconque des revendications 1 à 6, caractérisé en ce qu'on effectue la réaction en présence d'un catalyseur pris dans l'ensemble constitué par les acides minéraux, les acides carboxyliques à bas poids moléculaire, les hydroxydes de métaux alcalins et/ou de métaux alcalino-terreux, et les sels de ces métaux ou de métaux de transition avec les acides organiques mentionnés ci-dessus.

8. Procédé selon l'une quelconque des revendications 1 à 7, caractérisé en ce qu'on fait réagir la poix de résorcinol avec une résine phénolique de telle façon que les atomes d'hydrogène réactifs portés par les noyaux de la poix de résorcinol soient remplacés, totalement ou en une très grande proportion, par des radicaux de la résine phénolique.

9. Application du produit qui a été préparé selon l'une quelconque des revendications 1 à 8 comme liants pour meules.

## Claims

1. A process for the preparation of synthetic resins based on resorcinol compounds and oxo-compounds, characterised in that a resorcinol pitch which is obtained in the manufacture of resorcinol from benzenedisulfonic acid is reacted in at least one stage with oxo-compounds selected from aldehydes, ketones and compounds based on or splitting off these substances.

2. A process according to claim 1, characterized in that the resorcinol pitch is reacted with formaldehyde, an optionally alkylated phenolic resin, an amine resin or hexamethylenetetramine.

3. A process according to claim 1 or 2, characterised in that the reaction is effected at a temperature between room temperature and 300°C and preferably between 40 and 200°C.

4. A process according to one or more of claims 1 to 3, characterised in that 5 to 100, preferably 10 to 60 g of resorcinol pitch are reacted per mol phenol of a resol.

5. A process according to one or more claims 1 to 3 characterised in that 200 to 800 g, preferably 300 to 600 g, of resorcinol pitch are reacted per mole of formaldehyde.

6. A process according to one or more claims 1 to 5 characterised in that the resorcinol pitch is reacted in a first stage with a resol at 80 to 200, preferably 100 to 160°C to give a soluble product which is further reacted with a resol in a second stage.

7. A process according to one or more claims 1 to 6, characterised in that the reaction is effected in the presence of a catalyst selected from mineral acids or low molecular carboxylic acids, alkali metal and/or alkaline earth metal hydroxides, and salts of said metals or of transition metals with said organic acids.

8. A process according to one or more of claims 1 to 7 characterised in that the resorcinol pitch is reacted with a phenolic resin such that the reactive hydrogen atoms attached to the nuclei of the resorcinol pitch are largely or completely substituted with the phenolic resin.

9. Use of the products prepared according to one or more of claims 1 to 8 as binders for abrasive articles.